(19) Europäisches Patentamt
European Patent Office
Office européen des brevets

(11) **EP 2 792 462 B1**

(12) **EUROPEAN PATENT SPECIFICATION**

(45) Date of publication and mention of the grant of the patent:
**10.06.2020 Bulletin 2020/24**

(21) Application number: **12858025.5**

(22) Date of filing: **11.12.2012**

(51) Int Cl.:
**B29B 7/48** *(2006.01)* **B29C 48/57** *(2019.01)*
**B29C 48/62** *(2019.01)* **B29C 48/405** *(2019.01)*
**B29C 48/59** *(2019.01)* **B29C 48/645** *(2019.01)*
**B29C 48/54** *(2019.01)* **B29C 48/535** *(2019.01)*

(86) International application number:
**PCT/JP2012/082061**

(87) International publication number:
**WO 2013/089097 (20.06.2013 Gazette 2013/25)**

(54) **Dispersion kneading method**

Dispersive Knetmethode

méthode de malaxage dispersive

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2011 JP 2011273488**

(43) Date of publication of application:
**22.10.2014 Bulletin 2014/43**

(73) Proprietor: **Kabushiki Kaisha Kobe Seiko Sho (Kobe Steel, Ltd.)**
**Kobe-shi, Hyogo 651-8585 (JP)**

(72) Inventors:
• **YAMADA Sayaka**
**Hyogo 651-2271 (JP)**
• **FUKUTANI Kazuhisa**
**Hyogo 651-2271 (JP)**

• **YAMAGUCHI Kazuo**
**Hyogo 676-8670 (JP)**

(74) Representative: **TBK**
**Bavariaring 4-6**
**80336 München (DE)**

(56) References cited:
WO-A1-2010/035278      DE-U1-202013 009 015
JP-A- H0 550 425         JP-A- H0 550 425
JP-A- 2004 284 195       JP-A- 2007 007 864
JP-A- 2011 088 343       US-A1- 2005 024 986

• **Extricom: "Schneckenelemente", , 18 November 2010 (2010-11-18), XP055200777, Lauffen a.N. Retrieved from the Internet: URL:http://www.extricom.de/index.php?optio n=com_content&view=article&id=8&Itemid=35& lang=de [retrieved on 2015-07-07]**

**Description**

TECHNICAL FIELD

The present invention relates to a dispersion kneading method by using a kneading segment in an extruder or a continuous kneader.

BACKGROUND ART

Generally, in kneading equipment such as an extruder or a continuous kneader, pellets of polymer resins or powder of added substances are supplied into a barrel. The supplied material is fed to the downstream side while being kneaded by a pair of kneading screws inserted through the barrel.

The kneading screws are equipped with various segments, and each segment is fixed to a spline shaft that penetrates the center of the segment. For example, when a kneading segment such as a rotor segment or a kneading disk segment is combined with a screw segment, various materials may be kneaded in accordance with the purpose of the product.

Incidentally, in recent years, the type of kneading material becomes various, and the type of product produced by the kneader becomes various. Accordingly, there has been an increasing demand for the uniformity of the product depending on a degree in which a plurality of materials are uniformly kneaded.

Patent Document 1 discloses a screw of a twin-screw extruder that meets the above-described demand. The screw of the twin-screw extruder is the same direction engagement type twin-screw extruder screw which is formed by a feeding part, a kneading part, and a pumping part from a base to a front end thereof. Here, when an engagement gap $\Delta S$ between a screw root diameter and a mating screw outer diameter is uniform, it is possible to combine kneading screws in which a ratio $d_0/d_i$ between the screw outer diameter $d_0$ and the screw root diameter $d_i$ is 1.65 to 1.85 and 1.45 to 1.63.

According to the same direction engagement type twin-screw extruder screw of Patent Document 1, a self-cleaning action is ensured, and hence a kneading and extruding operation may be performed at an appropriate temperature without a local heating state.

WO 2010/035278 discloses an extruder comprising a housing having at least two cylindrical housing bores, each housing bore having an axis disposed parallel to the other axis and the first and second axes separated by a distance "a", at least a first screw shaft and a second screw shaft being disposed in the first and second housing bores, the first and second screw shaft being provided with a first and second screw respectively, the first and second screw each having an extruder diameter D and a screw root diameter d, the first and second screw shaft each having a volumetric ratio of at least 1.4 wherein the volumetric ratio is defined by the extruder diameter D divided by the screw root diameter d, at least two inlet hoppers being provided in the vicinity of the housing bores and opening into said housing bore with at least one of the inlet hopper having a side inlet into the housing bore.

JP H05 284195 A discloses that, when a resin material is entered in a kneading blade part, shearing forces from a rotor and a camber are applied thereon. This shearing force successively becomes larger from the apex of a feeding blade and the max at a turning point and decreases with approaching the rear end of the returning blade. A control mechanism measures the max resin pressure by means of a pressure sensor provided around this turning point and operates comparatively at an operating part whether the max shearing stress required for obtaining the necessary quality of the resin material is generated. Then, when it is not generated, the number of rotation of the rotor is changed by controlling a variable motor of the rotor and/or the distance of a gap is adjusted by driving a driving apparatus of a movable dam to change it at least to the max resin pressure generating the required max shearing. Further reference is made to US 2005/024986 A1, disclosing a modified kneading element for a screw extruder having an S-shaped cross-sectional shape with concave surfaces of the threads facing towards the rotation direction. stress.

CITATION LIST

PATENT DOCUMENT

Patent Document 1: JP 2004-284195 A

SUMMARY OF THE INVENTION

In general, a dispersion mixing (dispersion kneading) operation and a distribution mixing (distribution kneading) operation are known as the kneading operation. The dispersion kneading operation indicates a kneading operation that crushes an aggregation of filler, and the distribution kneading operation indicates a kneading operation that uniformly kneads a material. In the dispersion kneading operation, the elongation flow of the material is superior to the shear flow thereof. Accordingly, it may mention that the dispersion kneading operation may be effectively performed as a volume ratio of a fluid having a high elongation flow increases in the barrel.

Incidentally, the same direction engagement type twin-screw extruder screw disclosed in Patent Document 1 does not particularly care about the discrimination of the dispersion kneading operation or the distribution kneading operation. However, since each segment has an ability of a self-cleaning action (self-cleaning property) that scrapes off a resin adhering to the mating screw, the segment is formed so that the clearance (= distance between center axes - (segment outer diameter + segment root diameter)) between the segments becomes uniform.

However, when the clearance between the segments needs to be uniform, it is difficult to increase a fluid volume ratio by ensuring a space between the barrel and the segment. For this reason, it is difficult to perform the dispersion kneading operation while effectively promoting the elongation flow.

Therefore, the present invention is made in view of the above-described problems, and an object thereof is to provide a kneading method that increases a flow having a high elongation degree.

In order to solve the above-described problems, a kneading method according to the present invention employs the following technical means according to claim 1.

According to the present invention, there is provided a dispersion kneading method using a kneading segment provided in each of a pair of kneading screws rotatably accommodated in a barrel having a cavity therein and rotating in the same direction along with the kneading screws so as to knead a material supplied into the cavity of the barrel, wherein the kneading segment includes two kneading flights protruding outward in the radial direction, wherein a cross-sectional shape of the kneading element includes two identical outlines being symmetric to each other with respect to the spline shaft, and a ratio of a root diameter with respect to the curvature radius of the cavity of the barrel is 0.6 or less.

An outer surface connecting the kneading flights is formed by a convex surface and a concave surface from one kneading flight toward the other kneading flight, and the convex surface faces the rotation direction of the kneading segment.

Further, desirably, the kneading flights may be continuously formed in a spiral shape in the axial direction of the kneading screw, and a shape perpendicular to the axial direction of the kneading screw may be uniform.

Moreover, desirably, in a cross-section perpendicular to the axial direction of the kneading screw, a convex surface and a concave surface of an outer surface connecting the kneading flights may be continuous.

According to the present invention, it is possible to provide the kneading segment that increases a flow having a high elongation degree.

## BRIEF DESCRIPTION OF DRAWINGS

[Fig. 1] Fig. 1(a) is a schematic view of a twin-screw extruder according to a first embodiment of the present invention, and Fig. 1(b) is a cross-sectional view of a barrel in the axis perpendicular direction of the twin-screw extruder.
[Fig. 2] Fig. 2 is a cross-sectional view illustrating a configuration of a kneading segment according to the first embodiment of the present invention.
[Fig. 3] Fig. 3 is a cross-sectional view illustrating a configuration of a kneading segment according to a second embodiment of the present invention.
[Fig. 4] Fig. 4 is a graph illustrating a relation between a volume ratio of FN > 0.7 and a ratio of a root diameter with respect to a barrel radius in the kneading segments according to the first embodiment and the second embodiment of the present invention.

## DESCRIPTION OF EMBODIMENTS

(First Embodiment)

Hereinafter, a kneading segment 10A and a twin-screw extruder 1 according to a first embodiment being not part of the claimed invention will be described in detail based on the drawings.

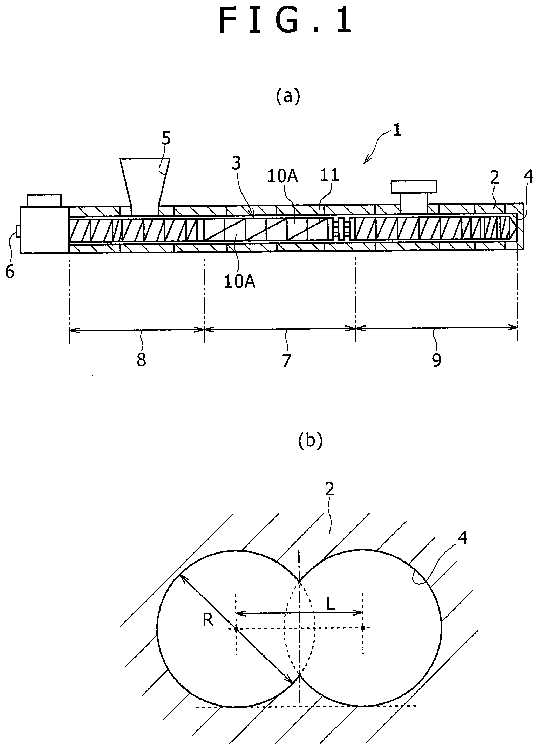

As illustrated in Figs. 1(a) and 1(b), the twin-screw extruder 1 of the present invention includes a barrel 2 of which the inside is formed as a cavity and a kneading rotor (a kneading screw) 3 which is accommodated in the cavity inside the barrel 2. The cavity capable of accommodating the kneading rotor 3 is formed inside the barrel 2 by forming two circular through-holes 4 in parallel. The inner wall surfaces of two circular through-holes 4 and 4 partially overlap each other, and a material is movable from one circular through-hole 4 to the other circular through-hole 4. The kneading rotor 3 is inserted through each of two circular through-holes 4 and 4. In this way, the extruder is configured as a twin-screw extruder with two kneading rotors 3 in total.

Next, a configuration of the twin-screw extruder 1 according to this embodiment will be described in detail.

Furthermore, in the description below, the left side of the drawing paper of Fig. 1(a) is referred to as the upstream side of the twin-screw extruder 1, and the right side of the drawing paper is referred to as the downstream side thereof. Further, the right and left direction of the drawing paper of Fig. 1(a) is referred to as the axial direction of the twin-screw extruder 1, and a direction perpendicular to the axial direction is referred to as the axis perpendicular direction.

As illustrated in Fig. 1(a), the barrel 2 is formed in an elongated cylindrical shape in the axial direction. As described above, two circular through-holes 4 and 4 are formed inside the barrel 2 so as to be parallel to each other from the upstream side toward the downstream side. A hopper 5 that supplies a material into the barrel 2 is provided at the upstream side of the barrel 2 in the axial direction. Further, an electric heater or a heating device (not illustrated) using heated oil is provided inside the barrel 2.

As illustrated in Fig. 1(b), the circular through-hole 4 is a substantially cylindrical lateral hole that is obtained by horizontally perforating the inside of the barrel 2 in the axial direction. The cross-section that is obtained by cutting the barrel 2 in the axis perpendicular direction includes an opening corresponding to the circular through-holes 4 and 4. The circular through-holes 4 are horizontally arranged in parallel in the axial direction, and are provided as a pair of circular through-holes in a direction perpendicular to the drawing paper of Fig. 1(b) so that the inner wall surfaces partially overlap each other. Thus, the cross-sectional shape that is obtained by cutting the barrel 2 in the axis perpendicular direction is formed as a so-called "eyeglass hole shape", and a material may be circulated (moved) between both circular through-holes 4 and 4.

Accordingly, the center distance L between the center axes of two circular through-holes 4 and 4 is set to be smaller than the inner diameter R of the circular through-hole 4. As illustrated in Fig. 1(b), since the center distance L is set to be smaller than the inner diameter R of the circular through-hole 4, the inner wall surfaces overlap each other in the range of about 60° in the vertical direction when the inner wall surface is viewed from the center axis of the circular through-hole 4. Conversely, the center distance L is set so that the inner wall surfaces overlap each other in the range of about 60° in the vertical direction.

The kneading rotors 3 are provided as a pair of kneading rotors in a direction perpendicular to the drawing paper of Fig. 1(b) so as to be respectively inserted through the circular through-holes 4. The pair of kneading rotors 3 and 3 is provided with a spline shaft 6 that is disposed in the axial direction, and a plurality of segments are fixed in a skewering state by the spline shaft 6. Furthermore, the twin-screw extruder 1 of the example of the drawing is the same rotation direction type twin-screw extruder in which the pair of kneading rotors 3 and 3 rotates inside the circular through-holes 4 in the same rotation direction (in the example of Fig. 1(b), the clockwise rotation direction toward the drawing paper).

As illustrated in Fig. 1(a), the kneading rotor 3 is formed by the combination of various segments in the axial direction, and is divided into a plurality of parts in response to the type of the combined segments. The kneading rotor 3 of the example of the drawing includes three parts, that is, a feeding part 8, a kneading part 7, and an extruding part 9 in the axial direction. The kneading part 7 is a part that kneads a material. The feeding part 8 is a part that is disposed at the upstream side of the kneading part 7 and feeds a material to the kneading part 7. The extruding part 9 is a part that is disposed at the downstream side of the kneading part 7 and feeds the material kneaded in the kneading part 7 to a pelletizer or the like at the downstream side.

The kneading part 7 among three parts is a part that is located at the center of the kneading rotor 3, and is formed by the plurality of kneading segments 10A continuously disposed in the axial direction. In this embodiment, the kneading segment 10A is a rotor segment. For example, the kneading part 7 is formed by continuously arranging six rotor segments 10A in parallel in the axial direction. The kneading segment 10A includes a substantially oval cross-section when the kneading segment is cut in the axis perpendicular direction, and includes two kneading flights 11A provided at both end sides along the long diameter of the oval. When the kneading rotor 3 rotates, these kneading flights 11A and 11A rotate so that the top surfaces (the front ends) of the kneading flights 11A scrape the inner peripheral surfaces of the circular through-holes 4 of the barrel 2. Accordingly, the kneading flights 11A and 11A knead the material while completely scraping the material adhering to the barrel 2.

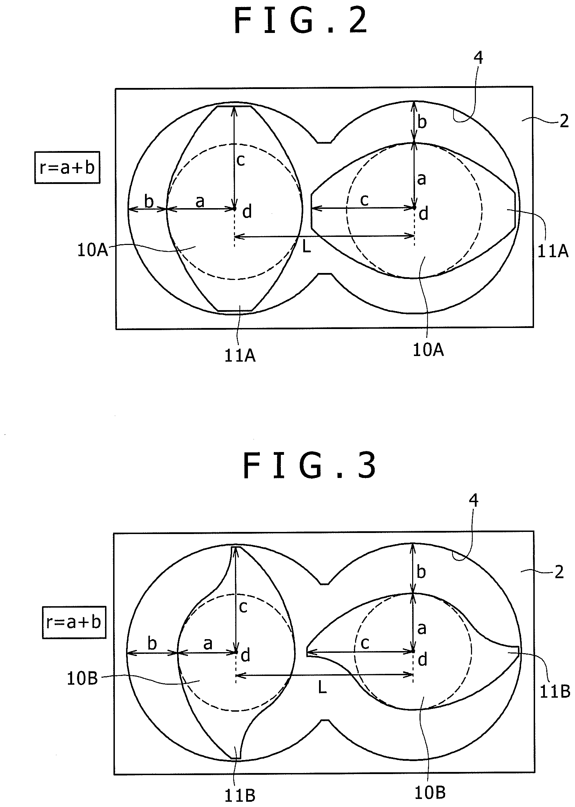

Referring to Fig. 2, a configuration of the rotor segment 10A according to this embodiment will be described. Fig. 2 is a cross-sectional view illustrating the adjacent rotor segments 10A and 10A provided in the pair of kneading rotors 3 and 3. As in the case of Fig. 1(b), the cross-sectional view of Fig. 2 illustrates a cross-section obtained when the barrel 2 and the adjacent rotor segments 10A and 10A are cut in the axis perpendicular direction. Furthermore, for convenience of description, the hatching is omitted.

As illustrated in Fig. 2, the rotor segment 10A is a pillar-shaped member, and is formed so as to have a substantially oval cross-sectional shape (a rugby ball (prolate spheroid) cross-sectional shape) when the rotor segment is cut in the axis perpendicular direction while being fixed to the spline shaft 6. Accordingly, the external shape of the rotor segment 10A is formed by a convex surface.

A through-hole (not illustrated) through which the spline shaft 6 is insertable is formed in the axial direction at the center of the cross-section of the rotor segment 10A.

In the substantially oval cross-section illustrated in Fig. 2, a half of the long diameter is indicated by the reference numeral c when the length of the long axis of the substantially oval shape is set as the long diameter, and is referred to as the outer diameter of the rotor segment 10A. Further, a half of the short diameter is indicated by the reference numeral a when the length of the short axis of the substantially oval shape is set as the short diameter, and is referred to as the root diameter of the rotor segment 10A. The intersection point between the long axis and the short axis is indicated by the reference numeral d, and corresponds to the axis center of the rotor segment 10A and the axis center of the spline shaft 6. A distance obtained when the root diameter a of the rotor segment 10A extends to the inner wall surface of the circular through-hole 4 of the barrel 2, that is, a distance from the surface of the rotor segment 10A to the inner wall surface of the circular through-hole 4 on the extension line of the root diameter a is indicated by the reference numeral b. When the radius (the curvature radius) of the circular through-hole 4 of the barrel 2 is indicated by the reference numeral r, the radius r is expressed by the sum ($r = a + b$) of the root diameter a and the distance b.

Here, the radius r of the circular through-hole 4 of the barrel 2 is slightly larger than the outer diameter c of the rotor segment 10A, and satisfies a relation ($r > c$). At this time, a difference ($r - c$) between the radius r and the outer diameter c is the clearance between the barrel 2 and the kneading flight 11A. Further, the center distance L between the center axes of two circular through-holes 4 and 4 is slightly larger than the sum of the root diameter a and the outer diameter c of the rotor segment 10A, and satisfies a relation ($L > a + c$). At this time, a difference between the center distance L and the sum ($a + c$) of the root diameter a and the outer diameter c is the clearance between the segments.

With such a shape, the rotor segment 10A includes at least two kneading flights 11A that protrude outward in the outer diameter direction.

Since the rotor segment 10A is the pillar-shaped member with the above-described cross-sectional shape, even the cross-section obtained when cutting the rotor segment in the axis perpendicular direction at any position in the axial direction includes the same shape as that of the above-described cross-section. However, the surface of the rotor segment 10A is provided with two kneading flights 11A and 11A that are formed in a spiral shape like a drill bit. That is, since two kneading flights 11A and 11A are continuously formed in a spiral shape in the axial direction, the rotor segment 10A includes an external shape like the drill bit. Here, the kneading flight 11A that is formed in the surface of one rotor segment 10A may not be twisted by, for example, 360° or 720° about the axis center d in the axial direction unlike the drill bit. The kneading flight 11A may be twisted by, for example, about 0° to 180°.

The rotor segment 10A according to this embodiment has a feature that the ratio ($a/r$) of the root diameter a with respect to the curvature radius r of the circular through-hole 4 as the cavity of the barrel 2 in the above-described cross-sectional shape is 0.6 or less ($a/r \leq 0.6$).

Here, the outer diameter c of the rotor segment 10A is shorter than the radius r of the circular through-hole 4 by the clearance between the barrel 2 and the kneading flight 11A, but the clearance is very small compared to the radius r. Accordingly, it is characterized in that the ratio ($a/c$) of the root diameter a with respect to the outer diameter c of the rotor segment 10A in the above-described cross-sectional shape is 0.6 or less ($a/c \leq 0.6$) when the outer diameter c is substantially equal to the radius r.

Furthermore, the root diameter a of the rotor segment 10A needs to satisfy a relation of $a > D$ when the radius of the spline shaft 6 inserted through the rotor segment 10A is indicted by D. Accordingly, the ratio of the root diameter a with respect to the curvature radius r of the circular through-hole 4 is ($a/r$) > ($D/r$).

In this way, the rotor segment 10A according to this embodiment has one feature in which the size of the root diameter a with respect to the curvature radius r and the outer diameter c of the rotor segment 10A of the circular through-hole 4 of the barrel 2 is set to a predetermined value or less. Since the ratio of the root diameter a with respect to the radius r or the outer diameter c is smaller than a predetermined value, a large space is formed between the barrel 2 and the root portion of the rotor segment 10A. Accordingly, a flow having a high elongation degree may be increased in the kneading material.

In this embodiment, the kneading part 7 of the kneading rotor 3 is formed by continuously disposing, for example, six rotor segments 10A with the above-described configuration in the axial direction of the spline shaft 6. Six rotor segments 10A are attached to the spline shaft 6 while the attachment angles about the axis center are changed, and the spiral kneading flights 11A and 11A thereof are continuous from the upstream rotor segment 10A toward the downstream rotor segment 10A. Accordingly, for example, the kneading flights 11A that may be twisted by 360° or 720° about the axis center d like the drill bit are formed from the upstream rotor segment 10A toward the downstream rotor segment 10A, thereby forming the kneading part 7.

In a case where each of the pair of kneading rotors 3 and 3 including the kneading part 7 is inserted through each of the circular through-holes 4 and 4, there is a need to cause the feeding part 8, the kneading part 7, and the extruding part 9 to engage with one another so that the pair of kneading rotors 3 and 3 does not contact each other.

As illustrated in Fig. 2, the kneading parts 7 and 7 of the pair of kneading rotors 3 and 3 engage with each other so that the long diameters of the cross-sections of the rotor segments 10A and 10A obtained when being cut in the axis perpendicular direction are substantially perpendicular to each other. Accordingly, the long diameters of the rotor segments 10A and 10A are typically perpendicular to each other as long as the pair of kneading rotors 3 and 3 rotates in the clockwise direction at the same speed.

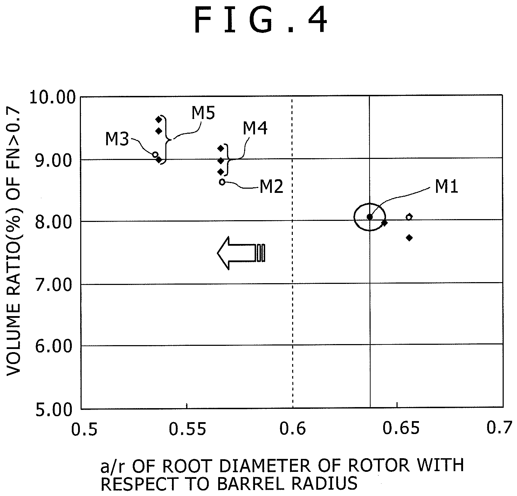

Referring to Fig. 4, an effect of the case of using the rotor segment 10A according to this embodiment will be described. Fig. 4 is a graph illustrating a "volume ratio (%) of FN > 0.7" for the ratio (a/r) of the root diameter a with respect to the radius r of the circular through-hole 4 of the barrel 2.

Here, the "volume ratio (%) of FN > 0.7" is a value indicating the volume ratio in the entire material of the material that generates the elongation flow in which the FN (the flow number) exceeds 0.7. Furthermore, the FN (the flow number) is an index that indicates the elongation degree of the flow field, and is defined by the following equation (1).

$$ FN = (|\text{corresponding distortion speed}|)/(|\text{corresponding distortion speed}| + |\text{vorticity}|) \dots (1) $$

By the definition of the equation (1), FN = 0 indicates a pure rotation state, FN = 1 indicates a pure elongation state, and FN = 0.5 indicates a pure shear state. Accordingly, the state where the volume ratio of FN > 0.7 is high indicates a state where a flow having a high elongation degree is generated in the entire material.

Here, returning to Fig. 4, the circle M1 indicates the test data obtained when the existing rotor segment of (a/r > 0.6) is used. The "volume ratio (%) of FN > 0.7" when the existing rotor segment (a/r ≈ 0.638) is used is about 8.00%. Further, Fig. 4 illustrates a state where the "volume ratio (%) of FN > 0.7" is only about 8.00% in the rotor segment with a value of about (a/r ≈ 0.65) according to the white circle.

Based on the "volume ratio (%) of FN > 0.7" (about 8.00%) according to such an existing rotor segment, the test data of the rotor segment 10A having a rugby ball shape according to this embodiment is referred.

In Fig. 4, the test data obtained when the rotor segment 10A with a value (a/r ≈ 0.567) according to this embodiment is used is indicated by a white circle M2. The circle M2 indicates a value in which the "volume ratio (%) of FN > 0.7" exceeds 8.50%, and the "volume ratio (%) of FN > 0.7" is higher than that of the existing rotor segment. Accordingly, when the rotor segment 10A with a value (a/r ≈ 0.567) according to this embodiment is used, a flow having a higher elongation degree than that of the existing rotor segment may be generated.

Further, in Fig. 4, the test data obtained when the rotor segment 10A with a value (a/r ≈ 0.537) according to this embodiment is used is indicated by a white circle M3. The white circle M3 indicates a value in which the "volume ratio (%) of FN > 0.7" exceeds 9.00%. Accordingly, when the rotor segment 10A (a/r ≈ 0.537) according to this embodiment is used, a flow having a high elongation degree may be further generated.

As described above, when the rotor segment 10A of this embodiment that satisfies a condition (a/r ≤ 0.6) or a condition (a/c ≤ 0.6) is used, a flow having a high elongation degree in the kneading material may be increased compared to the related art.

(Second Embodiment)

Next, a second embodiment of the present invention will be described. This embodiment is different from the first embodiment in that a kneading segment 10B having a configuration different from that of the kneading segment 10A is used. The other configurations of this embodiment are the same as those of the first embodiment. Hereinafter, a configuration of the kneading segment 10B according to this embodiment will be described.

Fig. 3 is a cross-sectional view illustrating adjacent rotor segments 10B and 10B provided in the pair of kneading rotors 3 and 3. The cross-sectional view of Fig. 3 indicates a cross-section obtained when the barrel 2 and the adjacent rotor segments 10B and 10B are cut in the axis perpendicular direction like Fig. 2 of the first embodiment. Furthermore, for convenience of description, the hatching is omitted.

As illustrated in Fig. 3, the rotor segment 10B is a pillar-shaped member that includes a cross-section taken along the axis perpendicular direction is substantially formed in an S-shape while being fixed to the spline shaft 6. The cross-section of the rotor segment 10B illustrated in Fig. 3 includes a shape in which a part of the cross-section of the substantially oval rotor segment 10A illustrated in Fig. 2 is notched, and includes long and short axes in the substantially oval shape. Like the kneading segment 10A according to the first embodiment, the kneading segment 10B according to this embodiment includes two kneading flights 11B and 11B at both end sides in the long axis.

It may mention that the cross-sectional shape of the rotor segment 10B illustrated in Fig. 3 includes a symmetric outline with respect to the spline shaft 6. That is, the cross-sectional shape includes two identical outlines being symmetric to each other with respect to the spline shaft 6. Each outline includes a convex portion and a concave portion. When the rotor segment 10B rotates in the clockwise direction toward the drawing paper of Fig. 3, the convex portion faces the rotation direction and the concave portion faces the counter-rotation direction. Here, the convex portion and the concave portion are smoothly continuous to each other, and a portion that changes from the convex portion to the concave portion is not discontinuous due to a step or the like. In other words, it may mention that the outline including a convex curve forming the convex portion and a concave curve forming the concave portion includes an inflection point.

In the external shape of the rotor segment 10B, the convex portion forms a convex surface, and the concave portion forms a concave surface. Based on this configuration, it may mention that a portion of the kneading flight 11B facing the rotation direction is formed by the convex surface and a portion of the kneading flight facing the counter-rotation direction is formed by the concave surface by referring to Fig. 3 again. That is, the outer surface that connects two kneading flights 11B and 11B includes the convex surface and the concave surface from one kneading flight 11B toward the other kneading flight 11B.

Furthermore, a through-hole (not illustrated) through which the spline shaft 6 is inserted is formed in the axial direction at the center of the cross-section of the rotor segment 10B.

In the cross-section of the rotor segment 10B illustrated in Fig. 3, a half of the long diameter is indicated by the reference numeral c when the length of the long axis is set as the long diameter, and is referred to as the outer diameter of the rotor segment 10B. Further, a half of the short diameter is indicated by the reference numeral a when the length of the short axis is set as the short diameter, and is referred to as the root diameter of the rotor segment 10B. The intersection point between the long axis and the short axis is indicated by the reference numeral d, and corresponds to the axis center of the rotor segment 10B and the axis center of the spline shaft 6. A distance obtained when the root diameter a of the rotor segment 10B extends to the inner wall surface of the circular through-hole 4 of the barrel 2, that is, a distance from the surface of the rotor segment 10B to the inner wall surface of the circular through-hole 4 on the extension line of the root diameter a is indicated by the reference numeral b, and the radius (the curvature radius) of the circular through-hole 4 of the barrel 2 is indicated by the reference numeral r. At this time, the radius r is expressed by the sum $(r = a + b)$ of the root diameter a and the distance b.

Here, the radius r of the circular through-hole 4 of the barrel 2 is slightly larger than the outer diameter c of the rotor segment 10B, and satisfies a relation $(r > c)$. At this time, a difference $(r - c)$ between the radius r and the outer diameter c is the clearance between the barrel 2 and the kneading flight 11B. Further, the center distance L between the center axes of two circular through-holes 4 and 4 is slightly larger than the sum of the root diameter a and the outer diameter c of the rotor segment 10B, and satisfies a relation $(L > a + c)$. At this time, a difference between the center distance L and the sum $(a + c)$ of the root diameter a and the outer diameter c is the clearance between the segments.

With such a shape, the rotor segment 10B includes at least two kneading flights 11B that protrude outward in the outer diameter direction.

Since the rotor segment 10B is the pillar-shaped member with the above-described cross-sectional shape, even the cross-section obtained when cutting the rotor segment in the axis perpendicular direction at any position in the axial direction includes a substantial S-shape like the above-described cross-section. However, the surface of the rotor segment 10B is provided with two kneading flights 11B and 11B that are formed in a spiral shape like a drill bit. That is, since two kneading flights 11B and 11B are continuously formed in a spiral shape in the axial direction, the rotor segment 10B includes an external shape like the drill bit. Here, the kneading flight 11B that is formed in the surface of one rotor segment 10B may not be twisted by, for example, 360° or 720° about the axis center d in the axial direction unlike the drill bit. The kneading flight 11B may be twisted by, for example, about 0° to 180°.

The rotor segment 10B according to this embodiment has a feature that the ratio $(a/r)$ of the root diameter a with respect to the curvature radius r of the circular through-hole 4 as the cavity of the barrel 2 in the above-described cross-sectional shape is 0.6 or less $(a/r \leq 0.6)$.

Here, when the outer diameter c is substantially equal to the radius r as in the first embodiment, it is characterized in that the ratio $(a/c)$ of the root diameter a with respect to the outer diameter c of the rotor segment 10B in the above-described cross-sectional shape is 0.6 or less $(a/c \leq 0.6)$.

Furthermore, the root diameter a of the rotor segment 10B needs to satisfy a relation of $a > D$ when the radius of the spline shaft 6 inserted through the rotor segment 10B is indicted by D. Accordingly, the ratio of the root diameter a with respect to the curvature radius r of the circular through-hole 4 is $(a/r) > (D/r)$.

In this way, the rotor segment 10B according to this embodiment has one feature in which the size of the root diameter a with respect to the curvature radius r and the outer diameter c of the rotor segment 10B of the circular through-hole 4 of the barrel 2 is set. Further, in addition to this feature, it is characterized in that when the outer diameter shape of the rotor segment 10B is formed by the convex surface and the concave surface smoothly continuous to each other, a portion of the kneading flight 11B facing the rotation direction is formed by the convex surface, and a portion facing the counter-rotation direction is formed by the concave surface.

Since a portion facing the counter-rotation direction is formed by the concave surface, a large space may be ensured between the barrel 2 and the rotor segment 10B in the counter-rotation direction of the kneading flight 11B, and hence much kneading material may be included in the space. In addition, since the root diameter a with respect to the radius r or the outer diameter c is set to be smaller than a predetermined size, more kneading material may be included in the space. Accordingly, the kneading time may be increased, and hence it is possible to increase the possibility that a fluid passes through a portion having a high elongation degree.

Referring to Fig. 4, an effect in the case of using the rotor segment 10B of this embodiment will be described.

Fig. 4 is a graph illustrating the "volume ratio (%) of FN > 0.7" as described in the first embodiment.

In Fig. 4, three test data items obtained when the rotor segment 10B with a value (a/r ≈ 0.567) according to this embodiment is used are indicated by three rhombic marks M4. These three marks M4 indicate the test result obtained by changing the clearance between the barrel 2 and the kneading flight 11B in three patterns. In any mark M4, the "volume ratio (%) of FN > 0.7" is about 9.00%. In the test data indicated by rhombic marks for the existing rotor segment (a/r = 0.650), the "volume ratio (%) of FN > 0.7" is about 8.00%, and the "volume ratio (%) of FN > 0.7" of this embodiment is high. Accordingly, when the rotor segment 10B with a value (a/r ≈ 0.567) according to this embodiment is used, a flow having a higher elongation degree than that of the existing rotor segment may be generated.

Further, in Fig. 4, three test data items obtained when the rotor segment 10B with a value (a/r ≈ 0.537) according to this embodiment is used are indicated by three rhombic marks M5. These three marks M5 also indicate the test result obtained by changing the clearance between the barrel 2 and the kneading flight 11B in three patterns. In any mark M5, the "volume ratio (%) of FN > 0.7" is about 9.00% to 9.50%, and a flow having a high elongation degree may be further generated.

As described above, when the rotor segment 10B of this embodiment that satisfies a relation (a/r ≤ 0.6) or (a/c ≤ 0.6) and includes the kneading flight 11B formed by the convex surface and the concave surface is used, a flow having a high elongation degree in the kneading material may be drastically increased compared to the related art.

Further, in the first embodiment and the second embodiment, each of the pair of rotor segment 10A and the pair of rotor segments 10B completely engages with each other so that the clearance between the segments becomes uniform. However, the clearance between the segments may be changed to a desired size with an arbitrary change of the curvature radius or the root diameter of the convex surface of each of the rotor segment 10A and the rotor segment 10B. That is, there is no need to cause each of the pair of rotor segments 10A and the pair of rotor segments 10B to completely engage with each other.

REFERENCE NUMERALS

| 1 | twin-screw extruder |
|---|---|
| 2 | barrel |
| 3 | kneading rotor |
| 4 | circular through-hole |
| 5 | hopper |
| 6 | spline shaft |
| 7 | kneading part |
| 8 | feeding part |
| 9 | extruding part |
| 10A, 10B | kneading segment |
| 11A, 11B | kneading flight |

**Claims**

1. A dispersion kneading method by using a kneading segment (10B) that is provided in each of a pair of kneading screws (3, 3) rotatably accommodated in a barrel (2) having a cavity (4) therein and rotating in the same direction along with the kneading screws (3, 3) so as to knead a material supplied into the cavity (4) of the barrel (2),

   wherein the kneading segment (10B) includes two kneading flights (11B) protruding outward in the radial direction,
   a cross-sectional shape of the kneading segment (10B) includes two identical outlines being symmetric to each other with respect to the spline shaft (6), and
   an outer surface connecting the kneading flights (11B) and being one of the two outlines is formed by one convex surface and one concave surface from one kneading flight (11B) toward the other kneading flight (11B) with an inflection point,
   **characterized in that**
   a ratio (a/c) of a root diameter (a) with respect to the outer diameter (c) of the rotor segment (10B) is 0.6 or less, and the convex surface faces the rotation direction of the kneading segment (10B).

2. The dispersion kneading method according to claim 1,

wherein the kneading flights (11B) are continuously formed in a spiral shape in the axial direction of the kneading screw (3), and
wherein a shape perpendicular to the axial direction of the kneading screw (3) is uniform.

3. The dispersion kneading method according to claim 1,
wherein in a cross-section perpendicular to the axial direction of the kneading screw (3), a convex surface and a concave surface of an outer surface connecting the kneading flights (11B) are continuous.

**Patentansprüche**

1. Dispersionsknetverfahren unter Verwendung eines Knetsegments (10B), das in jeder eines Paars von Knetschnecken (3, 3) vorgesehen ist, die drehbar in einem Zylinder (2) mit einem darin befindlichen Hohlraum (4) untergebracht sind und sich in derselben Richtung zusammen mit den Knetschnecken (3, 3) drehen, um ein in den Hohlraum (4) des Zylinders (2) zugeführtes Material zu kneten,

wobei das Knetsegment (10B) zwei Knetflügel (11B) aufweist, die in radialer Richtung nach außen vorstehen, eine Querschnittsform des Knetsegments (10B) zwei identische Umrisse aufweist, die in Bezug auf die Keilwelle (6) symmetrisch zueinander sind, und
eine Außenfläche, die die Knetflügel (11B) verbindet und einer der beiden Umrisse ist, durch eine konvexe Fläche und eine konkave Fläche von einem Knetflügel (11B) zu dem anderen Knetflügel (11B) mit einem Wendepunkt gebildet wird,
**dadurch gekennzeichnet, dass**
ein Verhältnis (a/c) eines Kerndurchmessers (a) in Bezug auf den Außendurchmesser (c) des Rotorsegments (10B) 0,6 oder weniger beträgt, und
die konvexe Oberfläche der Drehrichtung des Knetsegments zugewandt ist (10B).

2. Dispersionsknetverfahren nach Anspruch 1,

wobei die Knetflügel (11B) in der axialen Richtung der Knetschnecke (3) fortlaufend spiralförmig ausgebildet sind, und
wobei eine Form senkrecht zur axialen Richtung der Knetschnecke (3) uniform ist.

3. Dispersionsknetverfahren nach Anspruch 1,
wobei in einem Querschnitt senkrecht zur axialen Richtung der Knetschnecke (3) eine konvexe Fläche und eine konkave Fläche einer Außenfläche, die die Knetflügel (11B) verbindet, durchgehend sind.

**Revendications**

1. Procédé de malaxage dispersif utilisant un segment de malaxage (10B) qui est prévu dans chacune d'une paire de vis de malaxage (3, 3) logées, en rotation, dans une cuve (2) ayant une cavité (4) à l'intérieur de cette dernière et tournant dans la même direction conjointement avec les vis de malaxage (3, 3) afin de malaxer un matériau amené dans la cavité (4) de la cuve (2),
dans lequel le segment de malaxage (10B) comprend deux déflecteurs de malaxage (11B) faisant saillie vers l'extérieur dans la direction radiale,
une forme transversale du segment de malaxage (10B) comprend deux contours identiques qui sont symétriques entre eux par rapport à l'arbre cannelé (6), et
une surface externe raccordant les déflecteurs de malaxage (11B) et étant l'un des deux contours, est formée par une surface convexe et une surface concave à partir d'un déflecteur de malaxage (11B) vers l'autre déflecteur de malaxage (11B) avec un point d'inflexion,
**caractérisé en ce que** :

un rapport (a/c) d'un diamètre d'emplanture (a) par rapport au diamètre externe (c) du segment de rotor (10B) est de 0,6 ou moins, et
la surface convexe est orientée dans la direction de rotation du segment de malaxage (10B).

2. Procédé de malaxage dispersif selon la revendication 1,

dans lequel les déflecteurs de malaxage (11B) sont formés de manière continue dans une forme de spirale dans la direction axiale de la vis de malaxage (3), et

dans lequel une forme perpendiculaire à la direction axiale de la vis de malaxage (3) est uniforme.

3. Procédé de malaxage dispersif selon la revendication 1,

dans lequel, dans une section transversale perpendiculaire à la direction axiale de la vis de malaxage (3), une surface convexe et une surface concave d'une surface externe raccordant les déflecteurs de malaxage (11B) sont continues.

# FIG.1

## (a)

## (b)

# F I G . 2

# F I G . 3

# FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010035278 A
- JP H05284195 A
- US 2005024986 A1
- JP 2004284195 A